# EUROPEAN PATENT APPLICATION

(11) **EP 1 434 119 A2**
(43) Date of publication of application: **30.06.2004**
(21) Application number: 03029213.0
(22) Date of filing: 18.12.2003
(51) Int. Cl.: G06F 1/00

(54) **License management method and license management system**

(30) Priority: 25.12.2002 JP 2002374970
(71) Applicant: VICTOR COMPANY OF JAPAN, LIMITED, Yokohama-shi, Kanagawa-ken, 221-8528 (JP)
(72) Inventor: Miyazaki, Yuuki, Yokohama-shi Kanagawa-ken (JP)
(74) Representative: HOFFMANN - EITLE

(57) **Abstract**

A product management server (2) creates a first digital signature to be attached to a product from a license private key (21) and an identification code. A route server (3) creates a second digital signature from a route private key (31) and a license public key (22) and creates a third digital signature from an activation public key (42). An authentication server (4) checks the validity of the second digital signature and the license public key (22) and the validity of the first digital signature and the product identification code and creates a fourth digital signature from an activation private key (41), a product code, and a terminal code. A user terminal (5) checks the validity of the fourth digital signature and the activation public key (42) and the validity of the fourth digital signature, product identification code, and terminal code and, based on the checking result, releases a software function limitation.

## Description

### BACKGROUND OF THE INVENTION

### 1. Field of the Invention

The present invention relates to a license management method and a license management system that manage a software license using a private key and a public key in the public key cryptosystem.

### 2. Description of the Related Art

In general, software is distributed to the user on a recording medium such as a CD-ROM or over the Internet for downloading. Software distributed in this way can be easily copied. In fact, one copy of software is sometimes copied for use illegally on a plurality of computers.

To prevent such an illegal use, one conventional method is to use a license code. In this method, a license code is attached to software when it is sold or notified to the user when payment is confirmed. The user enters the license code when installing the software. This license code is authenticated by the software to confirm that the user is a legal user.

A problem with this method is that, once a license code is known, it is possible to use illegally copied software. In addition, once a license code generation pattern is leaked, a new license code is illegally generated and therefore software may be used illegally even if the user does not know a regular license code. Conversely, if a highly complicated license code is used, the computer operation becomes complicated. Therefore, this method is not effective for illegal use.

In view of the foregoing, another method is proposed in which software is managed through authentication using a sales management server and a license management server (Japanese Patent Laid-Open Publication No. 2000-207199). In this method, the sales management server issues a license code to the user and, at the same time, informs the license management server of issuance history. When the user informs the license management server of the license code and a machine identification code, the license management server compares the license code with the issuance history and, if there is no problem, issues a software usage key. Therefore, because the issuance history of license code can be checked and the user can be identified with the machine identification code, this method can prevent illegal copy.

However, this method does not authenticate the sales management server and the license management server. Therefore, though effective to an illegal user, this method cannot prevent illegal action when the sales management server or the license management server is illegal.

For example, when a sales management server is built illegally and a license code issued from that server is notified to a license management server, this illegality cannot be detected. Also, when a software usage key generation method is leaked from a license management server and another license management server is built illegally, this illegality cannot be detected. Thus, a problem with this method is that, if the sales management server or the license management server is illegal, this method cannot prevent such illegality.

### SUMMARY OF THE INVENTION

In view of the foregoing, it is an object of the present invention to provide a license management method and a license management system that perform the license management of software installed on a user terminal using a private key and a public key in the public key cryptosystem.

To achieve the above object, there is provided a license management method for use in a license management system wherein license management of software installed on a user terminal is performed using a private key and a public key in a public key cryptosystem, the license management system comprising a product management server that issues an identification code identifying a software product; an authentication server that has a database recording therein license information including the identification code and a terminal code identifying a user terminal and that compares information sent from the user terminal with the license information; and a route server that creates a digital signature used as a basis of authentication, the license management method comprising: a first digital signature creation step of creating, by the product management server, a first digital signature from the identification code using a private key of the product management server, the first digital signature being attached to the software product; a second digital signature creation step, by the route server, of obtaining a public key of the product management server from the product management server and creating a second digital signature from the public key of the product management server using a private key of the route server; a third digital signature creation step, by the route server, of obtaining a public key of the authentication server from the authentication server and creating a third digital signature from the public key of the authentication server using the private key of the route server; a first checking step, by the authentication server, of checking validity of the second digital signature using the public key of the route server obtained from the route server and, based on the checking result, obtaining the public key of the product management server; a second checking step, by the authentication server, of checking validity of the first digital signature using the public key of the product management server in response to the first digital signature and the terminal code from the user terminal and, based on the checking result, obtaining the identification code; a recording step, by the authentication server, of comparing the identification code and the terminal code with the license information recorded in the database and, if a predetermined condition is satisfied, recording the identification code and the terminal code in the database; a fourth digital signature creation step, by the authentication server, of creating a fourth digital signature from the identification code and the terminal code using a private key of the authentication server; a third checking step, by the user terminal, of checking validity of the third digital signature using the public key of the route server obtained from the route server and, based on the checking result, obtaining the public key of the authentication server; a fourth checking step, by the user terminal, of checking validity of the fourth digital signature using the public key of the authentication server obtained in the third checking step and, based on the checking result, obtaining the identification code and the terminal code; and a limitation release step, by the user terminal, of releasing a functional limitation of the software based on the checking result of the fourth checking step.

According to the present invention, the encryption key of the product management server and the encryption key of the authentication server are authenticatedby the route server before use using an encryption key of the route server. Therefore, it is possible to perform software license management that prevents an illegal action and that meets the requirement to prevent not only the forgery and alteration of software but also the forgery and alteration of an encryption key and to detect a fake product management server and a fake authentication server.

In a preferred embodiment of the present invention, the license management method is the method described above, wherein the authentication server has a server expiration date indicating an expiration date of the third digital signature, wherein, in the third digital signature creation step, the route server obtains the public key of the authentication server and the server expiration date from the authentication server and, using the private key of the route server, creates a digital signature of the authentication server from the public key of the authentication server and the server expiration date, and wherein, in the third checking step, the user terminal checks validity of the digital signature of the authentication server using the public key of the route server obtained from the route server and obtains the server expiration date and the public key of the authentication server, further comprising a comparison step of comparing the server expiration date with a current date, the server expiration date being verified as valid in the third checking step.

In this mode, the server expiration date that indicates the expiration date of the third digital signature is set. Therefore, even if server data is forged or tampered unexpectedly, the data can be used only for a limited period because the data becomes invalid when the server expiration date arrives.

In a preferred embodiment of the present invention, the license management method is the method described above, wherein the authentication server has a software expiration date indicating an expiration date of the software, wherein, in the fourth digital signature creation step, a digital signature of the terminal is created from the identification code, the terminal code, and the software expiration date using the private key of the authentication server, wherein, in the fourth checking step, the user terminal checks validity of the fourth digital signature using the public key of the authentication server obtained from the authentication server and obtains the identification code, the terminal code, and the software expiration date, and wherein, in the limitation release step, the functional limitation of the installed software is released based on the software expiration date verified as valid in the fourth checking step.

In this mode, if the user is prompted to perform activation again when the software expiration date expires, the user is required to perform activation again. Because the function stops when the software expiration date that is set expires, the software can be used only for a limited period even if data is tampered or forged unexpectedly.

To achieve the above object, there is provided a license management system comprising a user terminal on which a software product is installed; a product management server that issues an identification code identifying the software product; an authentication server that has a database recording therein license information including the identification code and a terminal code identifying the user terminal and that compares information sent from the user terminal with the license information; and a route server that creates a digital signature used as a basis of authentication, wherein the product management server comprises: first digital signature creation means for creating a first digital signature from the identification code using a private key of the product management server, the first digital signature being attached to the software product, wherein the route server comprises: second digital signature creation means for obtaining a public key of the product management server from the product management server and for creating a second digital signature from the public key of the product management server using a private key of the route server; and third digital signature creation means for obtaining a public key of the authentication server from the authentication server and for creating a third digital signature from the public key of the authentication server using the private key of the route server; wherein the authentication server comprises: first checking means for checking validity of the second digital signature using the public key of the route server obtained from the route server and, based on the checking result, for obtaining the public key of the product management server; second checking means for checking validity of the first digital signature using the public key of the product management server in response to the first digital signature and the terminal code from the user terminal and, based on the checking result, for obtaining the identification code; recording means for comparing the identification code and the terminal code with the license information recorded in the database and, if a predetermined condition is satisfied, for recording the identification code and the terminal code in the database; and fourth digital signature creation means for creating a fourth digital signature from the identification code and the terminal code using a private key of the authentication server; and wherein the user terminal comprises: third checking means for checking validity of the third digital signature using the public key of the route server obtained from the route server and, based on the checking result, for obtaining the public key of the authentication server; fourth checking means for checking validity of the fourth digital signature using the public key of the authentication server obtained from the third checking means and, based on the checking result, for obtaining the identification code and the terminal code; and limitation release means for releasing a functional limitation of the software based on the checking result of the fourth checking means.

According to the present invention, the encryption key of the product management server and the encryption key of the authentication server are authenticated by the route server before use using an encryption key of the route server. Therefore, it is possible to perform software license management that prevents an illegal action and that meets the requirement to prevent not only the forgery and alteration of software but also the forgery and alteration of an encryption key and to detect a fake product management server and a fake authentication server.

In a preferred embodiment of the present invention, the license management system is the system described above, wherein the authentication server has a server expiration date indicating an expiration date of the third digital signature, wherein the third digital signature creation means in the route server obtains the public key of the authentication server and the server expiration date from the authentication server and, using the private key of the route server, creates a digital signature of the authentication server from the public key of the authentication server and the server expiration date, wherein the third checking means checks validity of the digital signature of the authentication server using the public key of the route server obtained from the route server and obtains the server expiration date and the public key of the authentication server, and wherein the user terminal further comprises comparisonmeans for comparing the server expiration date with a current date, the server expiration date being verified as valid by the third checking means.

In this mode, the server expiration date that indicates the expiration date of the third digital signature is set. Therefore, even if server data is forged or tampered unexpectedly, the data can be used only for a limited period because the data becomes invalid when the server expiration date arrives.

In a preferred embodiment of the present invention, the license management system is the system described above wherein the authentication server has a software expiration date indicating an expiration date of the software, wherein the fourth digital signature creation means creates a digital signature of the terminal from the identification code, the terminal code, and the software expiration date using the private key of the authentication server, wherein the fourth checking means checks validity of the fourth digital signature using the public key of the authentication server obtained from the authentication server and obtains the identification code, the terminal code, and the software expiration date, and wherein the limitation release means releases the functional limitation of the installed software based on the software expiration date verified as valid by the fourth checking means.

In this mode, if the user is prompted to perform activation again when the software expiration date expires, the user is required to perform activation again. Because the function stops when the software expiration date that is set expires, the software can be used only for a limited period even if data is tampered or forged unexpectedly.

The nature, principle and utility of the invention will become more apparent from the following detailed description when read in conjunction with the accompanying drawings.

### BRIEF DESCRIPTION OF THE DRAWINGS

In the accompanying drawings:
FIG.1 is a diagram showing the configuration of a software management system according to the present invention;
FIG.2 is a diagram showing a data table indicating activation information;
FIG.3 is a flowchart showing the processing procedure of a product management server;
FIG.4 is a flowchart showing the processing procedure of a route server;
FIG.5 is a flowchart showing the processing procedure of an authentication server;
FIG.6 is a sequence diagram showing the relation among the processing procedures of the product management server, route server, and authentication server;
FIG.7 is a sequence diagram showing the processing procedures of a user terminal and the authentication server;
FIG. 8A and FIG. 8B show examples of screen displayed when activation is performed on the user terminal; and
FIG.9 is a flowchart showing the processing procedure for a digital signature and authentication according to the public key cryptosystem.

### DESCRIPTION OF THE PREFERRED EMBODIMENTS

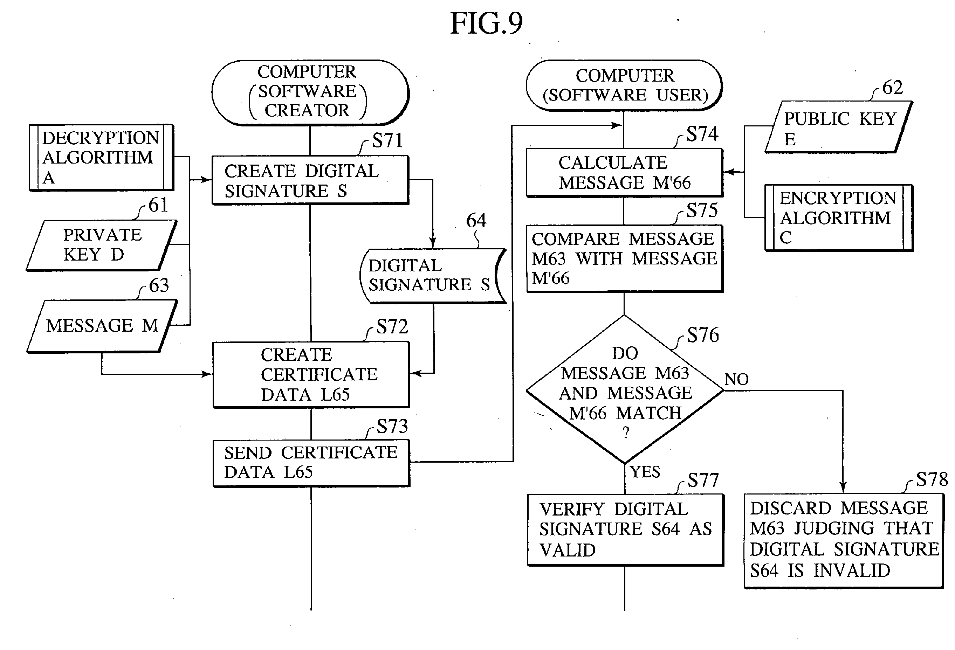

Before describing embodiments of the present invention, the principle of authentication in public key cryptosystem will be described first with reference to FIG.9.

A software creator has a pair of keys: a private key D61 and a public key E62. A digital signature S64 (S=A (D, M) ) is created from a message (software) M63 using the private key D61 and a decryption algorithm A (step S71), and certificate data L65 (L=(M, S)) in which the message M63 and the digital signature S64 are combined is created (step S72). The created certificate data L65 is sent to the software user (step S73). The public key E62 is publicly available to an unspecified number of persons.

The certificate data L65 is provided to a software user and, using the publicly available public key E62 and encryption algorithm C, a message M'66 (M'=C (E, S)) is calculated from the digital signature S64 included in the certificate data L65 (step S74). The message M63 and the message M'66 are compared (step S75) to check if they match (step S76). If they match, the digital signature S64 is verified as valid (step S77); if they do not match, the message M63 is discarded judging that the digital signature S64 is invalid (step S78).

If the certificate data L65 is not tampered or forged, the validity of the digital signature S64 is verified by the public key E62 that forms a pair with the private key D61. At the same time, the digital signature S64 is verified that it was created from the message M63 using the private key D61. Therefore, the software user can accept the message M63 as correct data from the software creator.

A software management system in this embodiment is configured based on the principle of authentication of this public key cryptosystem.

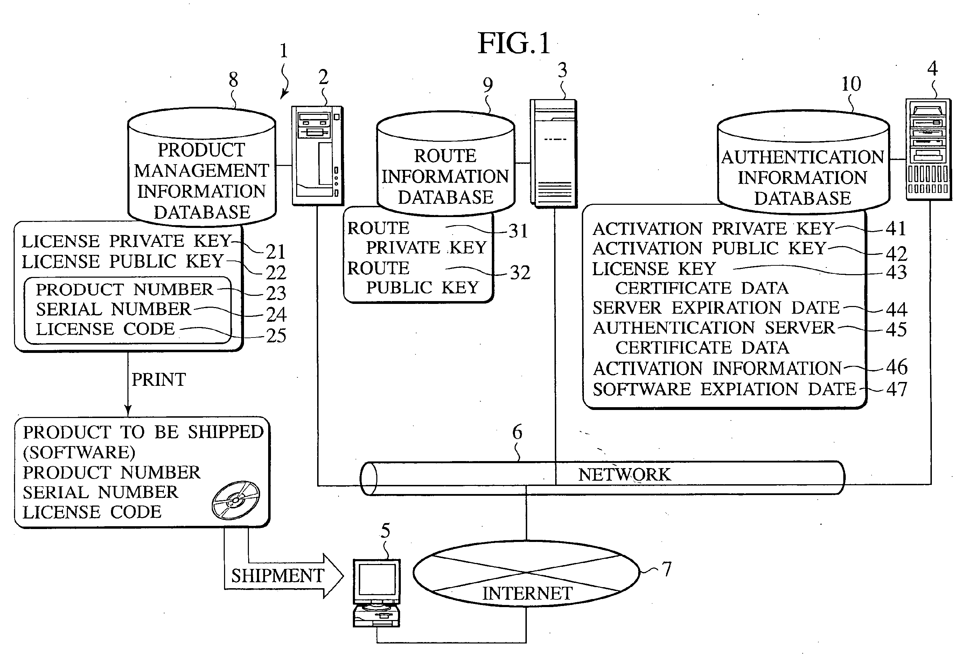

A software management system 1 in this embodiment will be described below with reference to FIG.1 through FIG.8.

First, the configuration of the software management system 1 in this embodiment will be described with reference to FIG.1.

The software management system 1 in this embodiment comprises a product management server 2, a route server 3, an authentication server 4, and a user terminal 5 that are interconnected via a network 6 such as a private LAN, a leased line, and the Internet 7. Although the servers 2-4 are connected via the network 6 such as a LAN in FIG.1, they may also be connected via the Internet 7. It is desirable that the product management server 2 be installed in a factory where a product (software) is packed and shipped and that the route server 3 be installed in a place where security is ensured.

The product management server 2 has a product management information database 8, the route server 3 has a route information database 9, and the authentication server 4 has an authentication information database 10.

The product management information database 8 of the product management server 2 contains a license private key 21, a license public key 22, a product number 23, a product serial number 24, and a license code 25. The route information database 9 of the route server 3 contains a route private key 31 and a route public key 32.

The authentication information database 10 of the authentication server 4 contains an activation private key 41, an activation public key 42, license key certificate data 43, a server expiration date 44, authentication server certificate data 45, activation information 46, and a software expiration date 47.

The license private key 21, license public key 22, route private key 31, route public key 32, activation private key 41, and activation public key 42 are designed, for example, according to the RSA system.

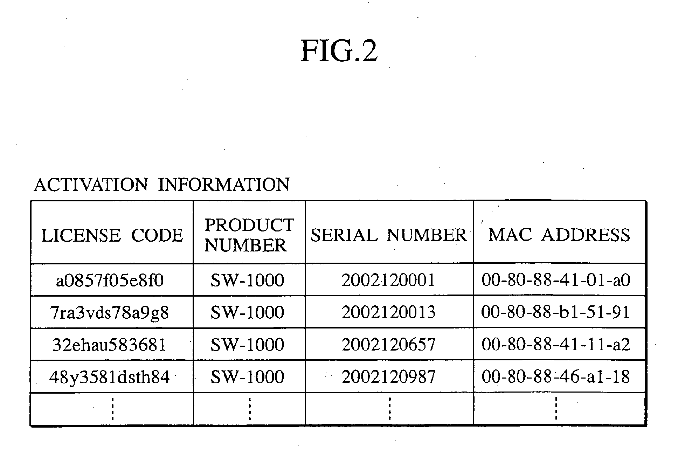

The activation information 46 recorded in the authentication information database 10 is stored in a data table in which the product number 23, serial number 24, license code 25, and MAC address (Media Access Control Address) sent from the user terminal 5 are recorded as shown in FIG.2.

The product management server 2, route server 3, authentication server 4, and user terminal 5 each have an encryption program and a decrypt ion program prepared in advance for the processing of each server. That is, the product management server 2 has an encryption program corresponding to a license private key 21; the route server 3 has an encryption program corresponding to a route public key 32; the authentication server 4 has a decryption program corresponding to a route public key 32, a decryption program corresponding to a license public key 22, and an encryption program corresponding to an activation private key 41; and the user terminal 5 has a decryption program corresponding to a route public key 32 and a decryption program corresponding to an activation public key 42. Those programs are used to encrypt or decrypt a digital signature.

### <Processing procedure of product management server>

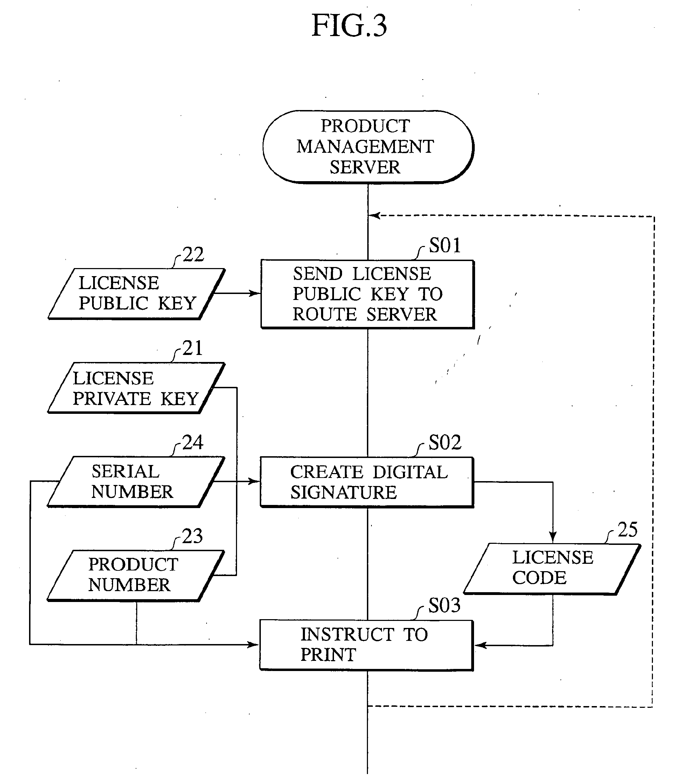

Next, the processing procedure of the product management server 2 will be described with reference to FIG.3.

When software is shipped from a factory, the product management server 2 issues the serial number 24 and attaches it to each product so that each product can be identified for product management, sales management, and support management. The serial number 24, created by combining the date, serial number and so on, is recorded in the product management information database 8. The serial number 24 is composed of YY/MM/serial number; for example, the serial number "2002120001" is created for the software shipped first in December in 2002.

In addition, the product number 23 is created so that the product type can be identified for production management, sales management, and support management and is recorded in the product management information database 8. This software product number 23 is, for example, "SW-1000".

First, the product management server 2 obtains the license public key 22 from the product management information database 8 and sends it to the route server 3 (step S01).

Next, the product management server 2 obtains the product number 23, serial number 24, and license private key 21 from the product management information database 8 and creates a digital signature using the product number 23, serial number 24, and license private key 21 (step S02). The product management server 2 records this digital signature in the product management information database 8 as the license code 25.

The product management server 2, to which a print device (not shown) such as a laser printer is connected, instructs the print device to print the product number 23, serial number 24, and license code 25 on a warranty to be attached to the product (step S03). The warranty on which those items are printed is attached to the software, which is then packed and shipped.

### <Processing procedure of route server>

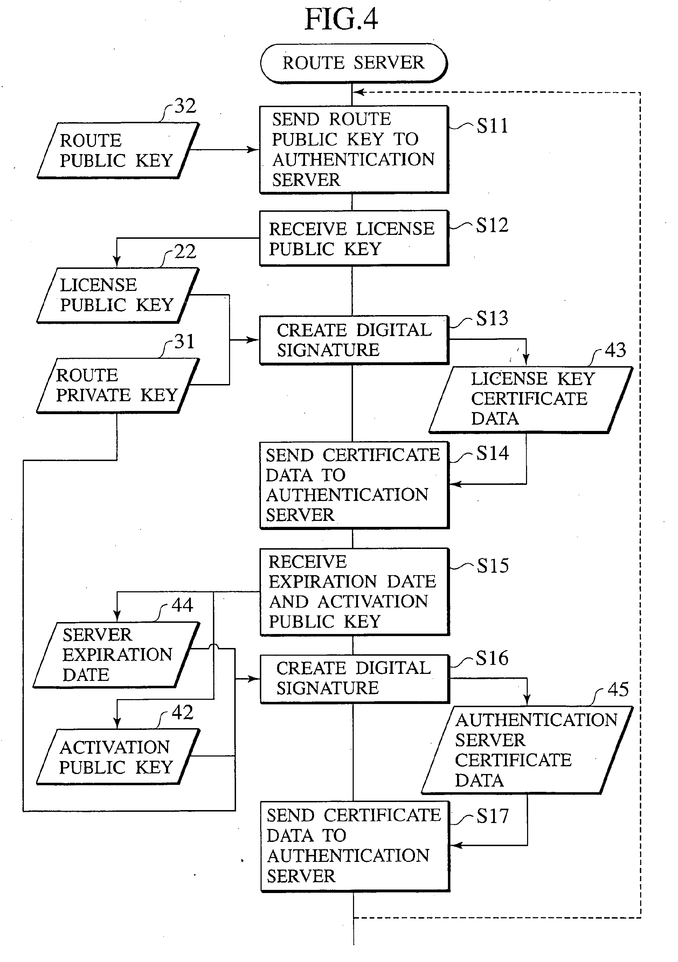

Next, the processing procedure of the route server 3 will be described with reference to FIG.4.

First, the route server 3 obtains the route public key 32 from the route information database 9 and sends it to the authentication server 4 (step S11).

Upon receiving the license public key 22 from the product management server 2 (step S12), the route server 3 obtains the route private key 31 from the route information database 9 and, creates a digital signature using the license public key 22 and the route private key 31 (step S13), and creates certificate data in which the license public key 22 and the digital signature are included. The route server 3 sends this certificate data to the authentication server 4 as license key certificate data 43 (step S14).

Upon receiving the server expiration date 44 and the activation public key 42 from the authentication server 4 (step S15), the route server 3 uses the server expiration date 44, activation public key 42, and route private key 31 to create a digital signature (step S16) and creates certificate data in which the server expiration date 44, activation public key 42, and digital signature are included. The route server 3 sends this certificate data to the authentication server 4 as the authentication server certificate data 45 (step S17).

To simplify authentication processing, the server expiration date 44 need not be used.

### <Processing procedure of authentication server>

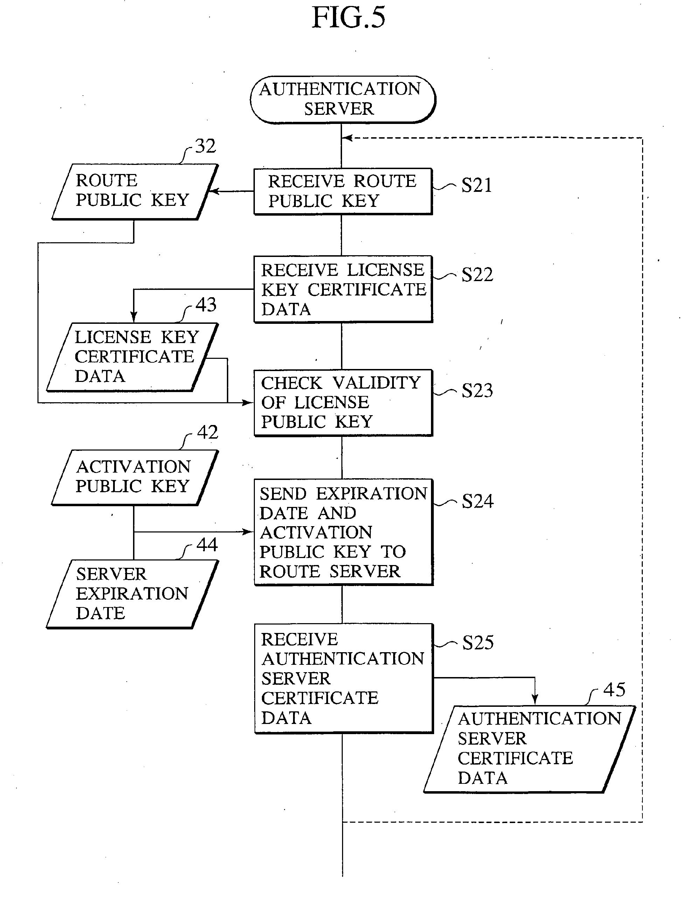

Next, the processing procedure of the authentication server 4 will be described with reference to FIG.5.

First, the authentication server 4 receives the route public key 32 from the route server 3 (step S21). The authentication server 4 also receives the license key certificate data 43 from the route server 3 (step S22).

Next, the authentication server 4 checks the validity of the digital signature included in the license key certificate data 43 using the route public key 32 to check if the license public key 22 is acceptable (step S23). If it is found that the license public key 22 created from the route public key 32 and the digital signature included in the license key certificate data 43 matches the license public key 22 included in the license key certificate data 43, the validity of the digital signature is verified and, from this time on, the authentication server 4 uses this license-public key 22. If any one of the digital signature and the license public key 22 is tampered or forged, the validity of the digital signature is not verified but the digital signature is rejected. In this case, the authentication server 4 displays a warning and terminates processing.

The authentication server 4 sets the server expiration date 44 of the digital signature and records it in the authentication information database 10. This server expiration date 44 is set, for example, to the end of the month that is three months from the month to which the current date belongs. That is, the server expiration date 44 of January 1^{st} in 2003 is April 30 in 2003. The server expiration date 44 is updated on the first day of every month.

The authentication server 4 obtains the server expiration date 44 that has been set and the activation public key 42 from the authentication information database 10 and sends them to the route server 3 (step S24).

When the route server 3 sends the authentication server certificate data 45 to the authentication server 4, the authentication server 4 receives the authentication server certificate data 45 and records it in the authentication information database 10 (step S25).

To simplify authentication processing, the server expiration date 44 need not be set.

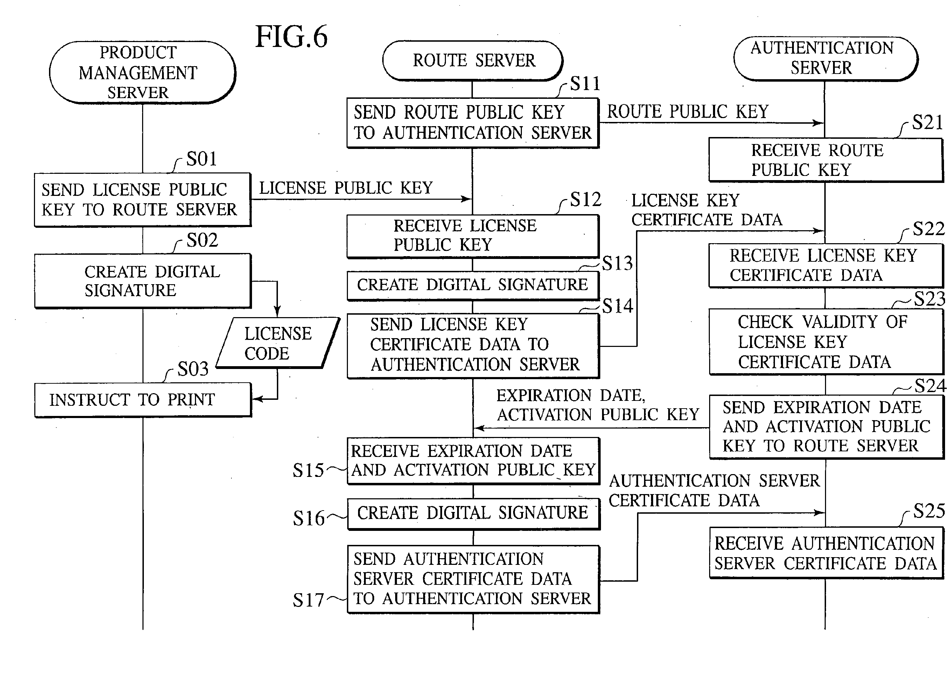

The processing procedures of the product management server 2, route server 3, and authentication server 4 described above are summarized as a sequence chart in FIG. 6. A sequence of processing shown in FIG.6 is performed when software is shipped.

### <Processing procedure of activation by user terminal 5>

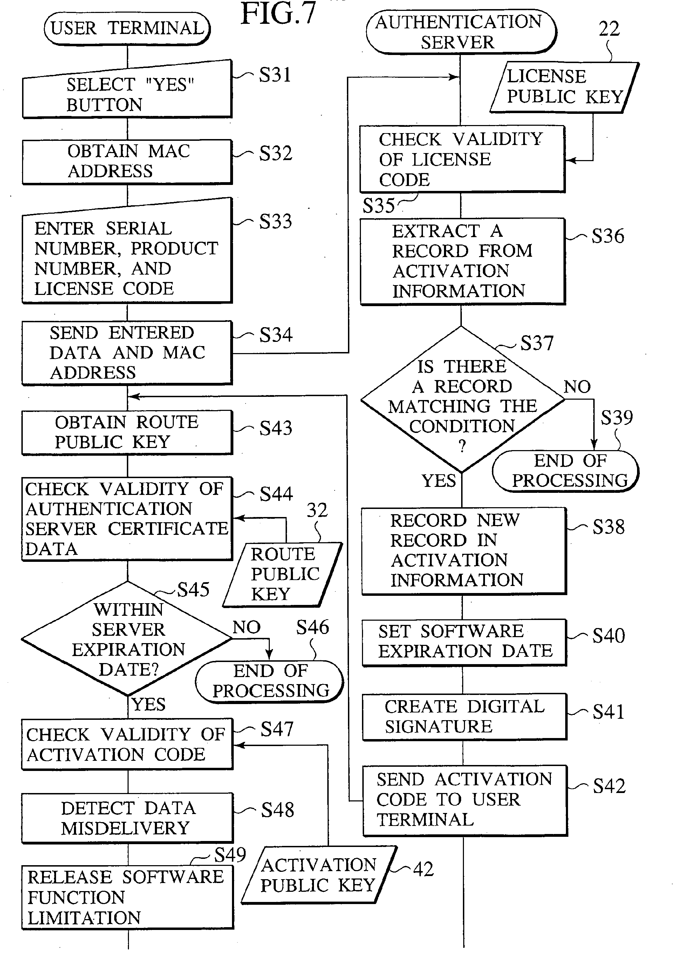

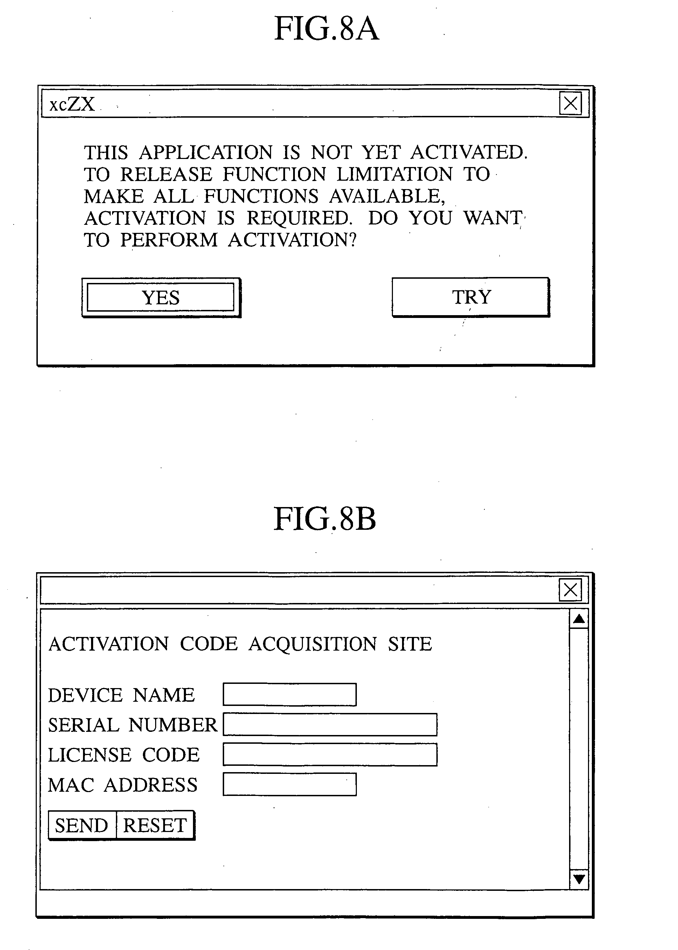

Next, activation processing executed by the user terminal 5 will be described with reference to FIGs. 7 and 8.

First, the user installs purchased software on the user terminal 5. Verifying that the software is regular software, releasing the functional limitation, and terminating the display of a warning are called activation. Because activation is not yet executed in this stage, the software does not fully function.

However, software sometimes does not work, or the processing speed varies, depending upon the PC environment. Therefore, even before activation, it is desirable that software be put in a state where its operation can be checked by making the software available with the functions partially limited or with an activation prompt message displayed.

The user starts activation after confirming that there is no problem in software operation. When software is started on the user terminal 5, an activation confirmation screen shown in FIG. 8A is displayed. When the user clicks the Yes button on the screen is FIG. 8A (step S31), the user terminal 5 first obtains its own MAC address (step S32).

A MAC address is a hardware address set up for identifying a host on the network 6. On Ethernet (registered trademark) , a 48-bit identification code, also called an Ethernet (registered trademark) address, is attached to a NIC (Network Interface Card) that is a device connected to the network 6. A MAC address is a globally unique address with the first 24 bits of 48 bits indicating a vendor specific ID managed by IEEE (Institute of Electrical and Electronic Engineers) and the last 24 bits indicating a serial number in each NIC. The user terminal 5 can be identified by this MAC address.

The MAC address obtained here is represented as a 12-digit hexadecimal number, for example, in the form "00-80-88-41-01-A0".

When the user enters the serial number 24, product number 23, and license code 25, described on the warranty attached to the software, on the entry screen shown in FIG. 8B and clicks the "Send" button (step S33), the user terminal 5 sends the MAC address, which was obtained before, and the serial number 24, product number 23, and license code 25 to the authentication server 4 via the Internet 7 (step S34). It is also possible that the user enters the MAC address.

On the other hand, upon receiving the serial number 24, product number 23, license code 25, and MAC address from the user terminal 5, the authentication server 4 first checks the validity of the license code 25 using the license public key 22 to check if the product number 23 and the serial number 24 are acceptable (step S35). The license public key 22, which has been determined to be valid by the route public key 32, is used for checking.

The authentication server 4 uses the license public key 22 and the license code 25 (digital signature) to decrypt the serial number 24 and the product number 23. The authentication server 4 compares the serial number 24 and the product number 23 decrypted from the license code 25 with the serial number 24 and the product number 23 sent from the user terminal 5. If they match, the validity of the license code 25 is verified and the product number 23 and the serial number 24 are accepted.

Conversely, if the authentication server 4 does not judge that the license code 25 is valid, awarning is displayed judging that the data has been tampered or forged and processing is terminated.

Next, when the validity of the product number 23, serial number 24, and license code 25 is verified, they are compared with the activation information 46. Each time activation is performed, a record containing the license code 25, product number 23, serial number 24, and the MAC address is generated and stored in the activation information 46.

First, the authentication server 4 determines whether or not to record a record, whose license code 25 is the same as the license code 25 whose validity has been verified, into the activation information 46 using the following conditions (step S36).
Condition 1: There is no record containing the same license code 25.
Condition 2: There is a record having a matching license code 25 and a matching MAC address.
Condition 3: The number of records having a matching license code and a different MAC address is two or less.

If at least one of the above three conditions is satisfied (step S37), the authentication server 4 records a record, composed of the product number 23, serial number 24, license code 25, and MAC address sent from the user terminal 5, into the activation information 46 as a new record (step S38). Only when a match occurs in both the license code 25 and the MAC address, no record is added to the activation information 46. If none of three conditions is satisfied, the authentication server 4 does not add a record to the activation information 46 but terminates processing (step S39).

A user, who must perform the fourth activation for some reason or other, is required to contact the service center via means such as a telephone. After the situation is accepted and the corresponding record is deleted from the activation information 46, the user performs activation again.

The authentication server 4 sets the software expiration date 47 indicating the expiration of the software (step S40). The software expiration date 47 is, for example, the end of the month that is six months from the month to which the current date belongs. That is, the software expiration date 47 of January 1^{st} in 2003 is July 31 in 2003. The software expiration date 47 is updated on the first day of every month.

Next, the authentication server 4 creates a digital signature using the product number 23, serial number 24, MAC address, software expiration date 47, license code 25, and activation private key 41 (step S41) and creates certificate data in which the product number 23, serial number 24, MAC address, software expiration date 47, license code 25, authentication server certificate data 45, and created digital signature are included. The authentication server 4 records this certificate data into the authentication information database 10 as an activation code and sends it to the user terminal 5 (step S42).

When the software expiration date 47 is not set in order to simplify authentication processing, the authentication server 4 creates a digital signature using the product number 23, serial number 24, MAC address, license code 25, and activation private key 41 and creates an activation code in which the product number 23, serial number 24, MAC address, license code 25, authentication server certificate data 45, and created digital signature are included.

In response to the activation code from the authentication server 4, the user terminal 5 accesses the route server 3 via the Internet 7 and obtains the route public key 32 (step S43).

First, the user terminal 5 extracts the authentication server certificate data 45 from the activation code, checks the validity of the digital signature included in the authentication server certificate data 45 using the route public key 32, and checks if the activation public key 42 and the server expiration date 44 are acceptable (step S44). When the server expiration date 44 is not set in order to simplify checking processing, the user terminal 5 checks the validity of the digital signature included in the authentication server certificate data 45 using the route public key 32 and checks if the activation public key 42 is acceptable.

The user terminal 5 decrypts the activation public key 42 and the server expiration date 44 using the route public key 32 and the digital signature included in the authentication server certificate data 45. The user terminal 5 compares the activation public key 42 and server expiration date 44 decrypted from the digital signature included in the authentication server certificate data 45 with the activation public key 42 and the server expiration date 44 included in the authentication server certificate data 45. If they match, the validity of the digital signature included in the authentication server certificate data 45 is verified, and the activation public key 42 and the server expiration date 44 are accepted.

Conversely, if the authentication server 4 does not judge that the digital signature included in the authentication server certificate data 45 is valid, a warning is displayed judging that the data has been tampered or forged and processing is terminated.

Next, the user terminal 5 compares the server expiration date 44 with the current date (step S45). If the expiration date has not yet arrived, control is passed to the next step; if the expiration date has already arrived, a warning is displayed and processing is terminated (step S46). The authentication server certificate data 45, even if stolen, cannot be used when the server expiration date 44 expires, meaning that its illegal use can be limited. If the server expiration date 44 is not set in order to simplify checking processing, the user terminal 5 does not perform this processing.

Next, the user terminal 5 checks the validity of the license code 25 using the activation public key 42 that has been verified as valid and checks if the product number 23, serial number 24, MAC address, and software expiration date 47 included in the activation code are acceptable (step S47).

The user terminal 5 decrypts the product number 23, serial number 24, MAC address, software expiration date 47, and license code 25 using the activation public key 42 and the digital signature included in the activation code. The user terminal 5 compares the product number 23, serial number 24, MAC address, software expiration date 47, and license code 25 decrypted from the digital signature included in the activation code with the product number 23, serial number 24, MAC address, software expiration date 47, and license code 25 included in the activation code. If theymatch, the validity of the digital signature included in the activation code is verified and the product number 23, serial number 24, MAC address, software expiration date 47, and license code 25 are accepted.

Conversely, if the authentication server 4 does not judge that the digital signature included in the activation code is valid, a warning is displayed and processing is terminated judging that the data has been tampered or forged.

The user terminal 5 compares the product number 23, serial number 24, license code 25, and MAC address included in the activation code with the product number 23, serial number 24, license code 25, and MAC address previously entered and sent to the authentication server 4 in order to detect data misdelivery or the stealing of authentication information on a different terminal (step S48).

When all checking processing is terminated, the user terminal 5 sets the software expiration date 47 as the expiration date of the software, releases the functional limitation to make all software functions available, and stops the warning display (step S49). If the software expiration date 47 is not set, the user terminal 5 releases the function limitation to make all software functions available forever and stops the warning display.

Thus, a sequence of all activation processing is completed.

Because the product number 23 and serial number 24 of software, the encryption key used by the product management server 2, and the encryption key used by the authentication server 4 are authenticated by the route server 3 as described above, a powerful authentication system is built that not only prevents the product number 23 and serial number 24 of software from being tampered but also prevents the encryption key used by the product management server 2 and the encryption key and activation code used by the authentication server 4 from being tampered or forged.

Although an example of encryption key in the RSA system is described in the above embodiment, there are public key cryptosystems other than RSA such as DSA (Digital Signature Algorithm) and E1Gamal. A public key cryptosystem other than RSA may also be used.

The authentication server certificate data 45 is sent to the user terminal 5 each time its validity is checked and, on the user terminal 5, the validity is checked by the public key of the route server 3. Therefore, even if the authentication server 4 is changed or the activation public key 42 or the activation private key 41 of the authentication server 4 is changed, the system may be used without change. In addition, even if server data is forged or tampered unexpectedly, the data can be used only for a limited period because the data becomes invalid when the server expiration date 44 arrives.

If it is desired to reduce the load of validity checking processing considering the tradeoff between cumbersome validity checking processing and an illegality prevention effect, it is also possible that the authentication server 4 does not set the server expiration date 44 and that the server expiration date 44 and the current date are not compared even on the user terminal 5.

In addition, if the system is built such that the user is prompted to perform activation again when the software expiration date 47 expires, the user is required to perform activation again. Because the function stops when the software expiration date 47 that is set expires, the software can be used only for a limited period even if data is tampered or forged unexpectedly.

If it is desired to reduce the user's load considering the tradeoff between cumbersome user operation and an illegal-use prevention effect, it is also possible that the authentication server 4 does not set the software expiration date 47 but that the user terminal 5 allows permanent activation.

Although, in the example in the embodiment described above, the license key certificate data 43 (digital signature of product management server 2 and license public key 22 of product management server 2) is sent to the authentication server 4 after generating the digital signature, it is also possible that the license key certificate data 43 is sent back to the product management server 2 for attaching it to the software product before shipment. In this case, the license key certificate data 43 is sent from the user terminal 5 to the authentication server 4 at activation time.

In this case, an advantage is that, even if a plurality of product management servers 2 are provided or the product management server 2 is extended or if the encryption key used by the product management server 2 is updated, the system can be usedwithout change with no consideration for the difference of encryption key.

Although, when the user terminal 5 obtains the route public key 32 of the route server 3, the user terminal 5 requests the route server 3 to send the route public key 32 of the route server 3 at authentication time and, in response to that request, the route server 3 sends the key in the example in the above embodiment, the present invention is not limited to this method. For example, the route public key 32 of the route server 3 - may be stored within the software.

Although the MAC address is used as the number unique to the user terminal 5 in the example in the embodiment above, the present invention is not limited to this address. For example, the number may be any number that identifies the user terminal 5, for example, a number generated by adding the checksum to the MAC address, the serial number of the processor, the ID of the hard disk, or a combination of them.

In the system according to the present invention, the encryption key of the product management server and the encryption key of the authentication server are authenticated by the route server before use, as detailed above, using an identification code unique to the software and a terminal code unique to the user terminal. Therefore, it is possible to perform software license management that prevents an illegal action and that meets the requirement to prevent not only the forgery and alteration of software but also the forgery and alteration of an encryption key and to detect a fake product management server and a fake authentication server.

The server expiration date is set that indicates the expiration date of a digital signature created from the public key of an authentication server using the private key of a route server. Therefore, even if server data is forged or tampered unexpectedly, the data can be used only for a limited period because the data becomes invalid when the server expiration date arrives.

In addition, if the system is built such that the user is prompted to perform activation again when the software expiration date expires, the user is required to perform activation again. Because the function stops when the software expiration date that is set expires, the software can be used only for a limited period even if data is tampered or forged unexpectedly.

It should be understood that many modifications and adaptations of the invention will become apparent to those skilled in the art and it is intended to encompass such obvious modifications and changes in the scope of the claims appended hereto.

## Claims

1. A license management method for use in a license management system wherein license management of software installed on a user terminal (5) is performed using a private key and a public key in a public key cryptosystem, said license management system comprising a product management server (2) that issues an identification code identifying a software product; an authentication server (4) that has a database (10) recording therein license information including the identification code and a terminal code identifying a user terminal and that compares information sent from said user terminal (5) with the license information; and a route server (3) that creates a digital signature used as a basis of authentication, said license management method comprising:
a first digital signature creation step of creating, by said product management server (2), a first digital signature from the identification code using a private key (21) of said product management server (2), said first digital signature being attached to the software product;
a second digital signature creation step, by said route server (3), of obtaining a public key (22) of said product management server (2) from said product management server (2) and creating a second digital signature from the public key (22) of said product management server (2) using a private key (31) of said route server (3);
a third digital signature creation step, by said route server, of obtaining a public key (42) of said authentication server (4) from said authentication server (4) and creating a third digital signature from the public key (42) of said authentication server (4) using the private key (31) of said route server (3);
a first checking step, by said authentication server (4) , of checking validity of the second digital signature using the public key (32) of said route server (3) obtained from said route server (3) and, based on the checking result, obtaining the public key (22) of said product management server (2);
a second checking step, by said authentication server (4), of checking validity of the first digital signature using the public key (22) of said product management server (2) in response to the first digital signature and the terminal code from said user terminal (5) and, based on the checking result, obtaining the identification code;
a recording step, by said authentication server (4), of comparing the identification code and the terminal code with the license information recorded in the database (10) and, if a predetermined condition is satisfied, recording the identification code and the terminal code in the database (10) ;
a fourth digital signature creation step, by said authentication server (4), of creating a fourth digital signature from the identification code and the terminal code using a private key (41) of said authentication server (4) ;
a third checking step, by said user terminal (5), of checking validity of the third digital signature using the public key (32) of said route server (3) obtained from said route server (3) and, based on the checking result, obtaining the public key (42) of said authentication server (4);
a fourth checking step, by said user terminal (5), of checking validity of the fourth digital signature using the public key (42) of said authentication server (4) obtained in said third checking step and, based on the checking result, obtaining the identification code and the terminal code; and
a limitation release step, by said user terminal (5), of releasing a functional limitation of the software based on the checking result of said fourth checking step.

2. The license management method according to claim 1,
wherein said authentication server (4) has a server expiration date indicating an expiration date of the third digital signature,
wherein, in said third digital signature creation step, said route server (3) obtains the public key (42) of said authentication server (4) and the server expiration date from said authentication server (4) and, using the private key (31) of said route server (3), creates a digital signature of said authentication server (4) from the public key (42) of said authentication server (4) and the server expiration date, and
wherein, in said third checking step, said user terminal (5) checks validity of the digital signature of said authentication server (4) using the public key (32) of said route server (3) obtained from said route server (3) and obtains the server expiration date and the public key (42) of said authentication server (4),
further comprising a comparison step of comparing the server expiration date with a current date, said server expiration date being verified as valid in said third checking step.

3. The license management method according to claim 1 or 2
wherein said authentication server (4) has a software expiration date indicating an expiration date of the software,
wherein, in said fourth digital signature creation step, a digital signature of said terminal (5) is created from the identification code, the terminal code, and the software expiration date using the private key (41) of said authentication server (4),
wherein, in said fourth checking step, said user terminal (5) checks validity of the fourth digital signature using the public key (42) of said authentication server (4) obtained from said authentication server (4) and obtains the identification code, the terminal code, and the software expiration date, and
wherein, in said limitation release step, the functional limitation of the installed software is released based on the software expiration date verified as valid in said fourth checking step.

4. A license management system comprising a user terminal (5) on which a software product is installed; a product management server (2) that issues an identification code identifying the software product; an authentication server (4) that has a database (10) recording therein license information including the identification code and a terminal code identifying said user terminal and that compares information sent from said user terminal with the license information; and a route server (3) that creates a digital signature used as a basis of authentication,
wherein said product management server (2) comprises:
first digital signature creation means for creating a first digital signature from the identification code using a private key (21) of said product management server (2), said first digital signature being attached to the software product,
wherein said route server (3) comprises:
second digital signature creation means for obtaining a public key (22) of said product management server (2) from said product management server (2) and for creating a second digital signature from the public key (22) of said product management server (2) using a private key (31) of said route server (3); and
third digital signature creation means for obtaining a public key (42) of said authentication server (4) from said authentication server (4) and for creating a third digital signature from the public key (42) of said authentication server (4) using the private key (31) of said route server (3);
wherein said authentication server (4) comprises:
first checking means for checking validity of the second digital signature using the public key (32) of said route server (3) obtained from said route server (3) and, based on the checking result, for obtaining the public key (22) of said product management server (2);
second checking means for checking validity of the first digital signature using the public key (22) of said product management server (2) in response to the first digital signature and the terminal code from said user terminal (5) and, based on the checking result, for obtaining the identification code;
recording means for comparing the identification code and the terminal code with the license information recorded in the database (10) and, if a predetermined condition is satisfied, for recording the identification code and the terminal code in the database (10); and
fourth digital signature creation means for creating a fourth digital signature from the identification code and the terminal code using a private key (41) of said authentication server (4); and
wherein said user terminal (5) comprises:
third checking means for checking validity of the third digital signature using the public key (32) of said route server (3) obtained from said route server (3) and, based on the checking result, for obtaining the public key (42) of said authentication server (4);
fourth checking means for checking validity of the fourth digital signature using the public key (42) of said authentication server (4) obtained from said third checking means and, based on the checking result, for obtaining the identification code and the terminal code; and
limitation release means for releasing a functional limitation of the software based on the checking result of said fourth checking means.

5. The license management system according to claim 4,
wherein said authentication server (4) has a server expiration date indicating an expiration date of the third digital signature,
wherein said third digital signature creation means in said route server (3) obtains the public key (42) of said authentication server (4) and the server expiration date from said authentication server (4) and, using the private key (31) of said route server (3), creates a digital signature of said authentication server (4) from the public key (42) of said authentication server (4) and the server expiration date,
wherein said third checking means checks validity of the digital signature of said authentication server (4) using the public key (32) of said route server (3) obtained from said route server (3) and obtains the server expiration date and the public key (42) of said authentication server (4), and
wherein said user terminal (5) further comprises comparison means for comparing the server expiration date with a current date, said server expiration date being verified as valid by said third checking means.

6. The license management system according to claim 4 or 5
wherein said authentication server (4) has a software expiration date indicating an expiration date of the software,
wherein said fourth digital signature creation means creates a digital signature of said terminal (5) from the identification code, the terminal code, and the software expiration date using the private key (41) of said authentication server (4),
wherein said fourth checking means checks validity of the fourth digital signature using the public key (42) of said authentication server (4) obtained from said authentication server (4) and obtains the identification code, the terminal code, and the software expiration date, and
wherein said limitation release means releases the functional limitation of the installed software based on the software expiration date verified as valid by said fourth checking means.
